# EUROPEAN PATENT APPLICATION

(11) **EP 2 990 286 A1**
(43) Date of publication of application: **02.03.2016**
(21) Application number: 14788442.3
(22) Date of filing: 25.03.2014
(51) Int. Cl.: B60W 10/08, B60K 6/36, B60K 6/387, B60K 6/40, B60K 6/48, B60K 6/547, B60L 11/14, B60L 11/18, B60W 10/02, B60W 10/04, B60W 10/18, B60W 10/26, B60W 20/00

(54) **VEHICLE CONTROL DEVICE**

(30) Priority: 25.04.2013 JP 2013092977
(71) Applicant: Aisin Seiki Kabushiki Kaisha, Kariya-shi, Aichi 448-8650 (JP)
(72) Inventor: SHISHIDO, Yo, Kariya-shi Aichi 448-8650 (JP); HARADA, Shinya, Kariya-shi Aichi 448-8650 (JP); TOJO, Takeshi, Kariya-shi Aichi 448-8650 (JP); MURAKAMI, Yoshihiro, Kariya-shi Aichi 448-8650 (JP)
(74) Representative: Kramer Barske Schmidtchen Patentanwälte PartG mbB
(86) International application number: PCT/JP2014/058334
(87) International publication number: WO 2014/174967

(57) **Abstract**

A vehicle control apparatus of embodiments includes a regeneration control portion, a judgment portion, a driving control portion and a discharge control portion. The regeneration control portion performs a regeneration control by the motor generator. The judgment portion determines whether or not the regeneration control by the motor generator is under execution and determining whether or not a state quantity of a battery exceeds a predetermined threshold value in a case where the regeneration control is under execution. The driving control portion disconnects between a driving shaft of the vehicle and the motor generator in a case where the regeneration control is under execution and the state quantity of the battery exceeds the predetermined threshold value. The discharge control portion discharges the battery by controlling the motor generator to perform a power operation in a state where the driving shaft and the motor generator are disconnected.

## Description

### TECHNICAL FIELD

Embodiments of the present invention relate to a vehicle control apparatus.

### BACKGROUND ART

A hybrid vehicle which is configured to be driven by switching between a motor driving mode where the vehicle is driven only by a motor and a hybrid driving mode where the vehicle is driven by both the motor and an engine is conventionally known. In order to acquire a necessary target deceleration driving force at a time of coast driving on a downhill, for example, the aforementioned hybrid vehicle includes a controller that performs a deceleration driving control by controlling a motor generator to perform a regenerative operation and controlling a transmission gear ratio of an automatic transmission. The controller controls the transmission gear ratio of the automatic transmission so that an engine friction greater than the target deceleration driving force is obtained and performs a discharge treatment so that a battery discharge is conducted by bringing the motor generator to a power running state in the hybrid driving mode in a case where a state of charge of the battery exceeds a predetermined threshold value under execution of the deceleration driving control.

### DOCUMENT OF PRIOR ART

### PATENT DOCUMENT

Patent document 1: JP2010-143511A

### OVERVIEW OF INVENTION

### PROBLEM TO BE SOLVED BY INVENTION

In the aforementioned known technique, however, the transmission gear ratio of the automatic transmission is specified in a manner that a higher gear ratio than a gear ratio at a normal shift stage is obtained for achieving the greater engine friction than the target deceleration driving force in a case where the battery is fully charged beyond the predetermined threshold value. As a result, the number of rotations of the engine increases, which causes a driver in the deceleration driving on the downhill to feel uncomfortable and which generates noise and vibration.

In addition, at a time of decrease of the state of charge of the battery, the regenerative operation by the motor generator is again performed and therefore the motor generator repeats power running and regeneration. As a result, the state of charge of the battery fluctuates depending on the control by the motor generator, which leads to difficulty in maintaining the state of charge to be constant. Further, the repetition of power running and regeneration heats up the motor generator, which leads to difficulty in performing the discharge control.

### MEANS FOR SOLVING PROBLEM

A vehicle control apparatus of the embodiments controlling a vehicle which is configured to be driven with a motor generator serving as a power source without a usage of an engine and which is configured to be driven with both the engine and the motor generator serving as the power source, the vehicle control apparatus includes a regeneration control portion performing a regeneration control by the motor generator, a judgment portion determining whether or not the regeneration control by the motor generator is under execution and determining whether or not a state quantity of a battery exceeds a predetermined threshold value in a case where the regeneration control is under execution, a driving control portion disconnecting between a driving shaft of the vehicle and the motor generator in a case where the regeneration control is under execution and the state quantity of the battery exceeds the predetermined threshold value, and a discharge control portion discharging the battery by controlling the motor generator to perform a power operation in a state where the driving shaft and the motor generator are disconnected. According to the aforementioned construction, uncomfortable feeling to a driver and generation of noise and vibration are inhibited. A state of charge of the battery is maintained constant and the discharge control may be easily performed. Further, the motor generator may be inhibited from being heated up.

In the vehicle control apparatus of the embodiments, the judgment portion further determines whether or not the state quantity decreases to or below a predetermined target value after the state quantity exceeds the predetermined threshold value. The discharge control portion discharges the battery by controlling the motor generator to perform the power operation until the state quantity decreases to or below the predetermined target value. According to the aforementioned construction, the state of charge of the battery is maintained constant to thereby easily perform the discharge control.

In the vehicle control apparatus of the embodiments, the motor generator and the engine includes a common output shaft via a transmission portion, each of the motor generator and the engine being configured to be independently connected and disconnected relative to the driving shaft by a gear shift stage of the transmission portion. The judgment portion further determines whether or not the gear shift stage is in a state where the engine is configured to independently transmit a driving force to the driving shaft. The driving control portion disconnects between the driving shaft of the vehicle and the motor generator in a case where the gear shift stage is in the state where the engine is configured to independently transmit the driving force to the driving shaft. According to the aforementioned construction, a smooth transition from deceleration by the regeneration control to deceleration by engine braking may achieve uninterrupted deceleration and may inhibit overcharge of the battery.

In the vehicle control apparatus of the embodiments, the regeneration control portion further prohibits the regeneration control by the motor generator in a case where the gear shift stage is in a state where the engine is inhibited from being configured to independently transmit the driving force to the driving shaft. According to the aforementioned construction, the overcharge of the battery may be inhibited.

The vehicle control apparatus of the embodiment further includes a first transmission portion for the motor generator and a second transmission portion for the engine, each of the first transmission portion and the second transmission portion being configured to be independently connected and disconnected relative to the driving shaft regardless of a gear shift stage of each of the first transmission portion and the second transmission portion. According to the aforementioned construction, a determination of whether or not the engine is configured to independently transmit the driving force to the driving shaft by the gear shift stage is not necessary.

In the vehicle control apparatus of the embodiments, the state quantity includes a state of charge (SOC). According to the aforementioned construction, the state of the battery is easily determinable on a basis of the SOC.

In the vehicle control apparatus of the embodiments, in a case where the predetermined threshold value is specified to be a first threshold value indicating that the battery is in a nearly fully charged state and the predetermined target value is specified to be a first target value smaller than the first threshold value, the discharge control portion discharges the battery until the state quantity decreases to or below the first target value, and the discharge control portion stops the discharge of the battery in a case where the state quantity decreases to or below the first target value. According to the aforementioned construction, the discharge control where the state of charge of the battery is maintained constant may be easily performed.

### BRIEF DESCRIPTION OF DRAWINGS

[Fig. 1] Fig. 1 is a block diagram of a hybrid vehicle according to a first embodiment;
[Fig. 2] Fig. 2 is a block diagram illustrating a schematic configuration of an integrated ECU according to the first embodiment;
[Fig. 3] Fig. 3 is a flowchart illustrating procedures of a driving control process according to the first embodiment;
[Fig. 4] Fig. 4 is a skeleton diagram of a transmission portion;
[Fig. 5] Fig. 5 is a flowchart illustrating procedures of a battery discharge control according to the first embodiment;
[Fig. 6] Fig. 6 is a graph illustrating a relation between a discharge target power and a basic target rotation number of a motor generator;
[Fig. 7] Fig. 7 is a graph illustrating a correlation between an engine rotation number and a rotation limit value;
[Fig. 8] is a graph illustrating a correlation between a target rotation number of the motor generator and a request torque;
[Fig. 9] Fig. 9 is a diagram illustrating a state of sequential changes of a vehicle speed at a gear shift stage at which a driving is possible by an engine alone, an accelerator opening degree, a SOC, a motor torque, a battery power and a gear shift stage;
[Fig. 10] Fig. 10 is a diagram illustrating a state of sequential changes of the vehicle speed in a case where the driving is impossible by the engine alone, the accelerator opening degree, the SOC, the motor torque, the battery power and the gear shift stage;
[Fig. 11] Fig. 11 is a block diagram of a drive system of the hybrid vehicle according to a second embodiment; and
[Fig. 12] Fig. 12 is a flowchart illustrating procedures of the driving control process according to the second embodiment.

### MODE FOR CARRYING OUT THE INVENTION

Embodiments of a vehicle control apparatus are explained in detail with reference to the attached drawings. In the embodiments described below, a hybrid vehicle at which the vehicle control apparatus is mounted is explained as an example.

### (First embodiment)

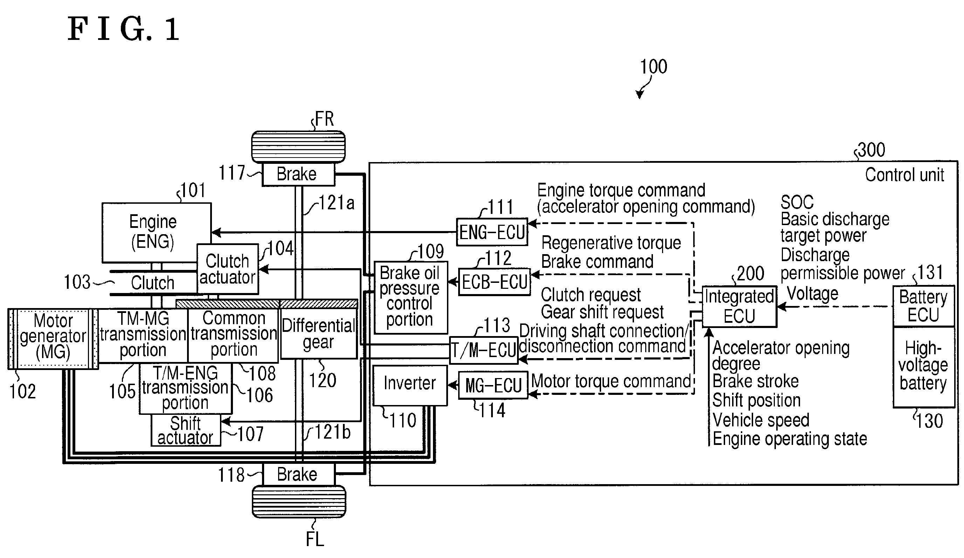

Fig. 1 is a block diagram of a hybrid vehicle 100 according to the present embodiment. As illustrated in Fig. 1, the hybrid vehicle 100 of the present embodiment is a front wheel drive vehicle including, as power sources, an engine (ENG) 101 outputting a rotational torque by fuel energy of fuel and a motor generator (MG) 102 outputting a rotational torque by electric energy. The hybrid vehicle 100 of the present embodiment includes a drive system and a control unit 300.

As the drive system, the hybrid vehicle 100 of the present embodiment includes a front right wheel FR and a front left wheel FL serving as driving wheels, drive shafts 121a, 121b and a differential gear 120 serving as a driving shaft, the engine 101, the motor generator 102, a clutch 103, a clutch actuator 104, transmission portions 105, 106, 108 (a T/M-MG transmission portion 105, a T/M-ENG transmission portion 106, a common transmission portion 108) and a shift actuator 107.

The engine 101 is, for example, an internal combustion engine outputting torque from an engine output shaft by combustion of fuel (hydrocarbon system such as petrol and diesel oil, for example). The engine 101 includes various sensors (for example, an engine rotation sensor and the like) and actuators (for example, actuators for driving an injector, a throttle valve and the like). The engine 101 is connected to be communicable to an engine ECU (ENG-ECU) 111 and is controlled by the engine ECU 111.

The clutch 103 is disposed between the engine 101, the transmission portions 105, 106, 108 and the motor generator 102 to allow or interrupt torque transmission from the engine 101 to the transmission portions 105, 106, 108. The clutch 103 is controlled to be engaged or released by the clutch actuator 104 which is driven and controlled by a transmission ECU (T/M-ECU) 113.

The motor generator 102 is a synchronous generator motor driven as an electric motor and also as an electric generator in a state where a permanent magnet is embedded in a rotor and a stator coil is wound around a stator. The motor generator 102 transmits and receives an electric power relative to a high-voltage battery 130 via an inverter 110. Specifically, the motor generator 102 is supplied with power from the high-voltage battery 130 to operate as the electric motor that is driven to rotate and is configured to output the torque based on the rotation drive to the T/M-MG transmission portion 105. The aforementioned state of the motor generator 102 is specified as a power running state.

In addition, the motor generator 102 receives the torque output from the engine 101 to the engine output shaft or the torque from the T/M-MG transmission portion 105 to generate an electromotive force at each end of the stator coil. The motor generator 102 operates as the electric generator to charge the high-voltage battery 130. The aforementioned state of the motor generator 102 is specified as a regenerative state.

Each of the transmission portions 105, 106 and 108 is a mechanism for transmitting the torque output from the motor generator 102 or the engine 101 to the driving wheels FR and FL via the driving shaft (differential gear 120 and drive shafts 121a, 121b). The transmission portions 105, 106 and 108 are constituted by the T/M-MG transmission portion 105, the T/M-ENG transmission portion 106 and the common transmission portion 108. The T/M-MG transmission portion 105 is the mechanism that switches a rotation torque output from the motor generator 102 to a rotation direction for moving forward or a rotation direction for moving rearward for acceleration or deceleration. The T/M-ENG transmission portion 106 is the mechanism that switches a rotation torque output from the engine output shaft of the engine 101 to a rotation direction for moving forward or a rotation direction for moving rearward for acceleration or deceleration. The common transmission portion 108 is the mechanism that puts together the rotation torque transmitted from the motor generator 102 and the rotation torque transmitted from the engine 101 to transmit the resulting rotation torque to the driving wheels FR and FL via the driving shaft (differential gear 120 and drive shafts 121a, 121b). Each of the transmission portions is configured to be switchable to plural gear shift stages. The shift actuator 107 controls the switching of the gear shift stage of each of the T/M-ENG transmission portion 106, the T/M-MG transmission portion 105 and the common transmission portion 108.

The differential gear 120 is a gear that generates a differential motion between the front right wheel FR and the front left wheel FL in a case where the rotation torque from the common transmission portion 108 is transmitted to the driving wheels FR and FL.

Because of the aforementioned construction of the drive system of the hybrid vehicle 100 of the present embodiment, the motor generator 102 and the engine 101 includes a common output shaft via the transmission portions 105, 106 and 108. Each of the motor generator 102 and the engine 101 is configured to be independently connected and disconnected relative to the driving shaft (differential gear 120 and drive shafts 121a, 121b) based on the gear shift stages of the transmission portions 105, 106 and 108.

Next, the control unit 300 of the hybrid vehicle 100 is explained. The control unit 300 controls the entire hybrid vehicle 100. As illustrated in Fig. 1, the control unit 300 mainly includes the inverter 110, a brake oil pressure control portion 109, the engine ECU (ENG-ECU) 111, an electronic control brake ECU (ECB-ECU) 112, the transmission ECU (T/M-ECU) 113, a motor generator ECU (MG-ECU) 114, an integrated ECU 200, the high-voltage battery 130 and a battery ECU 131.

The battery ECU 131 controls the high-voltage battery 130 and notifies the integrated ECU 200 of information regarding the high-voltage battery 130 such as a state of charge SOC, a discharge permissible power and an electric voltage, for example.

The engine ECU (ENG-ECU) 111 is connected to be communicable to the various actuators (for example, actuators for driving a throttle valve, an injector and the like), the various sensors (for example, an engine rotation sensor and the like) and the integrated ECU 200. The engine ECU (ENG-ECU) 111 receives an engine torque command (accelerator opening command) from the integrated ECU 200 to control the operation of the engine 101.

The electronic control brake ECU (ECB-ECU) 112 is electrically connected to the brake oil pressure control portion 109 and the integrated ECU 200. The electronic control brake ECU 112 receives a brake command or a regenerative torque from the integrated ECU 200 and sends a command to the brake oil pressure control portion 109 based on the brake command or the regenerative torque so as to perform a brake control by an electronic control brake system (ECB: Electronically Control Braking System) serving as a kind of a brake-by-wire system.

The brake oil pressure control portion 109 receives a command from the ECB-ECU 112 and performs a brake oil pressure control on brakes 117 and 118 so that braking is automatically executed on the driving wheels depending on a vehicle state.

The transmission ECU (T/M-ECU) 113 is electrically connected to the clutch actuator 104, the shift actuator 107 and the integrated ECU 200. The transmission ECU 113 receives a clutch request from the integrated ECU 200 and controls the clutch actuator 104 so as to control connection and disconnection of the clutch 103. In addition, the transmission ECU 113 receives a gear shift request from the integrated ECU 200 and controls the shift actuator 107 to thereby control switching of the gear shift stage of each of the transmission portions 105, 106 and 108.

The inverter 110 generates a three-phase alternating current based on a control signal from the motor generator ECU (MG-ECU) 114 and applies the three-phase alternating current to the motor generator 102 to thereby control the operation (driving operation, power generation operation, regenerative operation) of the motor generator 102. The inverter 110 is electrically connected to the high-voltage battery 130 via a boost converter (not illustrated).

The motor generator ECU (MG-ECU) 114 is connected to be communicable to the inverter 110, various sensors (for example, rotation sensor) not illustrated, and the integrated ECU 200. The motor generator ECU 114 receives a motor torque command from the integrated ECU 200 and controls the operation of the motor generator 102 via the inverter 110.

Here, each of the engine ECU 111, the electronic control brake ECU 112, the transmission ECU 113 and the motor generator ECU 114 performs the aforementioned various control processes based on a control signal from the integrated ECU 200 in a state where a central processing unit (CPU) which is not illustrated reads out a predetermined program (including database, map and the like) from a storage medium such as a read only memory (ROM) which is not illustrated, for example, and executes the program that is read out.

The integrated ECU 200 controls the operations of the engine ECU 111, the electronic control brake ECU 112, the transmission ECU 113 and the motor generator ECU 114. The integrated ECU 200 is connected to be communicable to the engine ECU 111, the electronic control brake ECU 112, the transmission ECU 113, the motor generator ECU 114, various sensors (for example, rotation sensor) and various switches (for example, ignition switch). In the present embodiment, the integrated ECU 200 receives an accelerator opening degree from an accelerator opening sensor (not illustrated) and receives a vehicle speed of the hybrid vehicle 100 from a vehicle speed sensor (not illustrated). In addition, the integrated ECU 200 receives an operating state of the engine 101 from the engine ECU 111. Further, the integrated ECU 200 receives a brake stroke from a brake stroke sensor (not illustrated), receives a shift position from a shift lever (not illustrated) and receives a state of charge SOC from the high-voltage battery 130.

The integrated ECU 200 of the present embodiment, for example, detects a coast driving state by detecting that the accelerator opening degree is zero from the accelerator opening sensor (not illustrated) and detects a downhill driving state from a downhill sensor (not illustrated) and the like. The integrated ECU 200 performs a regeneration control by applying a negative torque to the motor generator 102 during the coast driving on the downhill so that deceleration is applied to the hybrid vehicle 100 to perform a deceleration driving control where a constant vehicle speed is maintained.

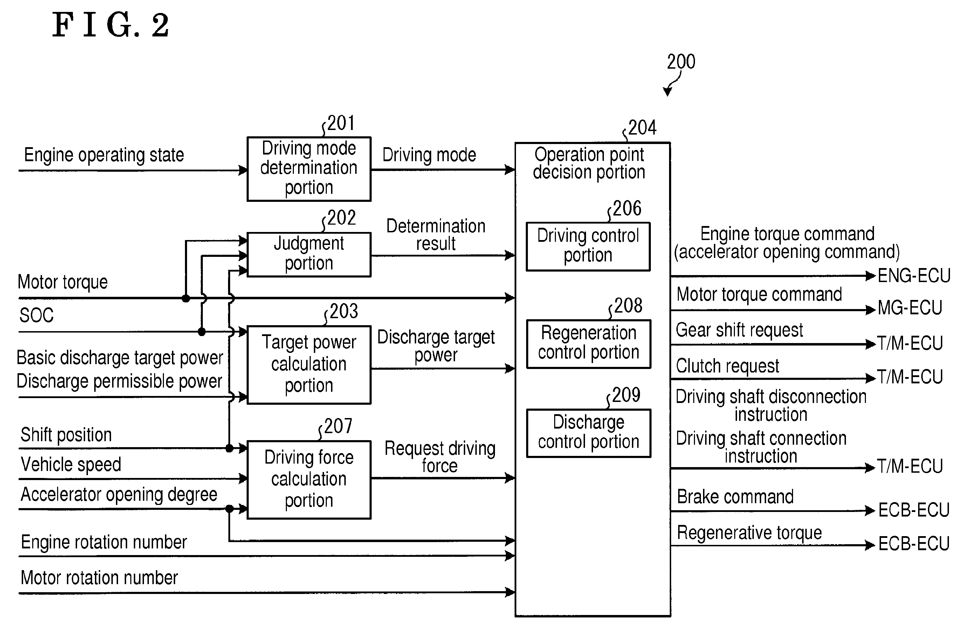

Details of the integrated ECU 200 are explained below. Fig. 2 is a block diagram illustrating a functional configuration of the integrated ECU 200 of the present embodiment. The integrated ECU 200 of the present embodiment includes, as illustrated in Fig. 2, a driving mode determination portion 201, a judgment portion 202, a driving force calculation portion 207, a target power calculation portion 203 and an operation point decision portion 204.

In the integrated ECU 200, the CPU not illustrated reads out the predetermined program (including database, map and the like) from the storage medium such as the ROM not illustrated, for example, and executes the program that is read out depending on predetermined circumstances of the hybrid vehicle 100 so that the integrated ECU 200 functions as each of the aforementioned portions. The integrated ECU 200 which functions as each of the aforementioned portions performs a function of each of the portions explained below so as to output the control signals to the engine ECU 111, the electronic control brake EUC 112, the transmission ECU 113 and the motor generator ECU 114.

The driving mode determination portion 201 inputs the operating state of the engine 101 from the engine ECU 111 to determine the driving mode of the hybrid vehicle 100 based on the operating state of the engine 101. Here, the driving mode of the present embodiment includes a motor driving mode and a hybrid driving mode. The motor driving mode (hereinafter referred to as an "EV driving mode") is a driving mode where the hybrid vehicle 100 is driven with only the motor generator 102 as the power source without the usage of the engine 101 in the disconnected state of the clutch 103. The hybrid driving mode (hereinafter referred to as a "HV driving mode") is a driving mode where the hybrid vehicle 100 is driven with both the engine 101 and the motor generator 102 as the power source in the connected state of the clutch 103. The driving mode determination portion 201 outputs the determined driving mode to the judgment portion 202.

The driving force calculation portion 207 obtains a driving force (request driving force) requested from a driver by an acceleration operation of the driver based on the accelerator opening degree input from the accelerator opening sensor (not illustrated) and the vehicle speed input from the vehicle speed sensor. The driving force calculation portion 207 transmits the calculated request driving force to the judgment portion 202 and the operation point decision portion 204.

The judgment portion 202 inputs a present motor torque from the motor generator ECU 114. The judgment portion 202 then determines whether or not the regeneration control by the motor generator 102 is under execution based on whether or not the motor torque is negative.

In addition, the judgment portion 202 determines whether or not a state quantity of the high-voltage battery 130 exceeds a predetermined threshold value in a case where it is determined that the regeneration control is being performed. The state quantity of the high-voltage battery 130 is information regarding the state of the high-voltage battery 130 and corresponds to the SOC, for example. At this time, however, the state quantity of the high-voltage battery 130 is not limited to the SOC.

In the present embodiment, the SOC is used as the state quantity of the high-voltage battery 130. That is, the judgment portion 202 inputs the present SOC from the battery ECU 131 and then, in a case where the judgment portion 202 determines that the regeneration control is being performed, the judgment portion 202 determines whether or not the SOC serving as the state quantity of the high-voltage battery 130 exceeds a predetermined first threshold value. Further, the judgment portion 202 determines whether or not the SOC decreases to or below a predetermined target SOC (target value) by a discharge control of the high-voltage battery 130 which is explained later after the SOC exceeds the first threshold value.

Here, the first threshold value is a value indicating that the high-voltage battery 130 is in a nearly fully charged state. The target SOC is a value (first target value) smaller than the first threshold value.

The target value of the state quantity of the high-voltage battery 130 is arbitrarily determinable. In the present embodiment where the SOC is used as the state quantity, the target SOC as the target value changes as below. The SOC depends on the temperature of the high-voltage battery 130. That is, deterioration of the high-voltage battery 130 progresses during a long-term storage in a state where the SOC is high and the temperature of the high-voltage battery 130 is high. Therefore, in the present embodiment, in a case where the temperature of the high-voltage battery 130 is equal to or greater than a predetermined temperature at which the high-voltage battery 130 is likely to be deteriorated while being stored, the target SOC is specified to decrease for the determination by the aforementioned judgment portion 202. Accordingly, the performance of the high-voltage battery 130 may be maintained.

In the present embodiment, the temperature of the high-voltage battery 130 is utilized for the determination of whether or not the target SOC is brought to decrease, however, whether or not the target SOC is brought to decrease is not limited to be based on the temperature of the high-voltage battery 130. The judgment portion 202 and the like may be configured so that the determination of whether or not the target SOC is brought to decrease is based on whether or not an outside temperature or a vehicle interior temperature is higher than a predetermined temperature, for example.

In addition, the judgment portion 202 determines, on a basis of the shift position, whether or not the gear shift stage of each of the transmission portions 105, 106 and 108 is in a state so that the engine 101 is capable of independently transmitting the driving force to the driving shaft.

The target power calculation portion 203 inputs a basic discharge target power and a discharge permissible power from the battery ECU 131 and calculates a discharge target power based on the basic discharge target power and the discharge permissible power. The target power calculation portion 203 transmits the calculated discharge target power to the operation point decision portion 204. Here, the basic target power is determined by the battery ECU 131.

The operation point decision portion 204 obtains a target engine torque of the engine 101, a target motor torque of the motor generator 102, a target connection volume of the clutch 103, a target gear shift stage of each of the transmission portions 105, 106, 108, the regenerative torque and the like based on the accelerator opening degree, the request driving force, the discharge target power, the driving mode and the like as operation point attainable targets thereof. The operation point decision portion 204 mainly includes, as illustrated in Fig. 2, a driving control portion 206, a regeneration control portion 208 and a discharge control portion 209. In the operation point decision portion 204 illustrated in Fig. 2, portions related to the present embodiment are only illustrated.

The regeneration control portion 208 performs the regeneration control by the motor generator 102. Specifically, the regeneration control portion 208 calculates the regenerative torque (negative torque) for the regeneration control by the motor generator 102 to send the regenerative torque to the ECB-ECU 112 and also sends the motor torque command of the regenerative torque to the motor generator ECU 114 so that braking by the regenerative torque (regenerative braking) is performed.

The regeneration control portion 208 prohibits the regeneration control by the motor generator 102 in a case where the regeneration control portion 208 is notified, as the determination result from the judgment portion 202, that the gear shift stage of each of the transmission portions 105, 106 and 108 is in a state so that the engine 101 is incapable of independently transmitting the driving force to the driving shaft.

The driving control portion 206 transmits a driving shaft connection instruction and a driving shaft disconnection instruction to the transmission ECU 113 to control connection and disconnection between the driving shaft of the hybrid vehicle 100 and the motor generator 102. Specifically, the driving control portion 206 of the present embodiment transmits the driving shaft disconnection instruction to the transmission ECU 113 in a case where the driving control portion 206 is notified, as the determination result from the judgment portion 202, that the gear shift stage is in the state so that the engine 101 is capable of independently transmitting the driving force to the driving shaft, the regeneration control portion 208 is performing the regeneration control by the motor generator 102, and the SOC as the state quantity of the high-voltage battery 130 exceeds the first threshold value. The driving shaft of the hybrid vehicle 100 and the motor generator 102 are disconnected and a driving force transmission path to the motor generator 102 is interrupted.

The discharge control portion 209 transmits a positive motor torque command to the motor ECU 114 in a state where the SOC as the state quantity of the high-voltage battery 130 exceeds the first threshold value and the driving shaft and the motor generator 102 are disconnected so that the motor generator 102 performs a power operation. Accordingly, the high-voltage battery 130 of which the SOC exceeds the first threshold value is discharged. The discharge control portion 209 controls the motor generator 102 to perform the power operation to discharge the battery until the SOC decreases to or below the target SOC. In a case where the SOC decreases to or below the target SOC, the discharge control portion 209 stops the power operation of the motor generator 102 to stop the discharge of the high-voltage battery 130.

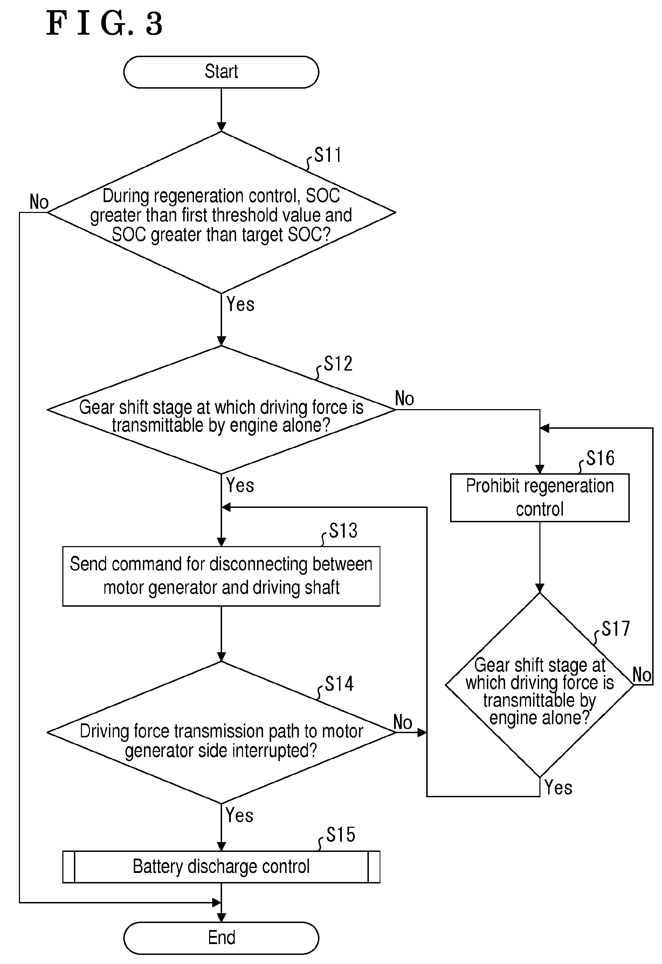

Next, a driving control process of the present embodiment configured as mentioned above is explained. Fig. 3 is a flowchart indicating procedures of the driving control process according to the first embodiment. In the present embodiment, the hybrid vehicle 100 is in the coast driving on the downhill.

First, the judgment portion 202 determines whether or not the regeneration control by the motor generator 102 is presently performed, the SOC of the high-voltage battery 130 is greater than the first threshold value, and the SOC of the high-voltage battery 130 is greater than the target SOC (step S11).

Then, in a case where it is determined that the regeneration control by the motor generator 102 is not presently performed or the SOC of the high-voltage battery 130 is equal to or smaller than the first threshold value or the SOC of the high-voltage battery 130 is equal to or smaller than the target SOC (No in step S11), the process is terminated.

On the other hand, in a case where it is determined that the regeneration control by the motor generator 102 is presently performed, the SOC of the high-voltage battery 130 is greater than the first threshold value and the SOC of the high-voltage battery 130 is greater than the target SOC (Yes in step S11), the judgment portion 202 further determines whether or not the gear shift stage is in the state where the engine 101 is configured to independently transmit the driving force to the driving shaft (step S12).

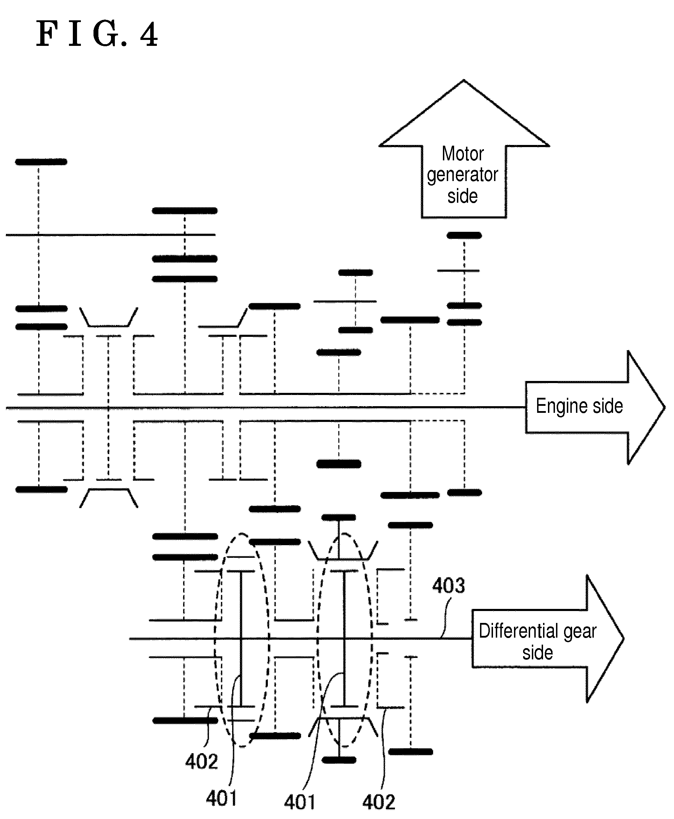

Fig. 4 is a skeleton diagram of the transmission portions 105, 106 and 108 illustrating a state where the driving shaft is disconnected. The judgment portion 202 determines that the gear shift stage is in the state where the engine 101 is capable of independently transmitting the driving force to the driving shaft in a case of determining, on a basis of the shift position, for example, that a sleeve 401 is connected to a gear 402 on a countershaft 403 which is connected to the differential gear 120 at a portion with dashed lines in Fig. 4.

In a case where it is determined that the gear shift stage is in the state where the engine 101 is capable of independently transmitting the driving force to the driving shaft (Yes in step S12), the driving control portion 206 sends the command for disconnecting between the motor generator 102 and the driving shaft to the transmission ECU 113 (step S13). Accordingly, the driving shaft is disconnected from the motor generator 102 to interrupt the driving force transmission path to the motor generator 102.

The driving control portion 206 sends the driving shaft disconnection command in step S13 to the transmission ECU 113 until the interruption of the driving force transmission path to the motor generator 102 is completed (No in step S14).

Here, as illustrated at the portion with the dashed lines in Fig. 4, the driving shaft is disconnected by the disconnection of the sleeve 401 from the gear 402 on the countershaft 403 that is connected to the differential gear 120 to achieve a neutral position.

Then, when the driving shaft is disconnected from the motor generator 102 and the interruption of the driving force transmission path to the motor generator 102 is completed (Yes in step S14), a battery discharge control is performed (step S15). Details of the battery discharge control are explained later.

Back to step S12, in a case where it is determined that the gear shift stage is in the state where the engine 101 is incapable of independently transmitting the driving force to the driving shaft (No in step S12), the regeneration control portion 208 prohibits the regeneration control by the motor generator 102 (step S16). That is, the regeneration control portion 208 stops the regeneration control which is presently performed. Accordingly, overcharge of the high-voltage battery 130 is inhibited.

The judgment portion 202 again determines whether or not the gear shift stage is in the state where the engine 101 is capable of independently transmitting the driving force to the driving shaft (step S17). In a case where it is determined that the gear shift stage is in the state where the engine 101 is incapable of independently transmitting the driving force to the driving shaft (No in step S17) by downshifting conducted by the driver, for example, the process returns to step S16 where the regeneration control portion 208 prohibits the regeneration control (step S16).

On the other hand, in a case where it is determined that the gear shift stage is in the state where the engine 101 is capable of independently transmitting the driving force to the driving shaft (Yes in step S17), the process moves to step S 13 where the driving control portion 206 sends the command for disconnecting between the motor generator 102 and the driving shaft to the transmission ECU 113 to interrupt the driving force transmission path to the motor generator 102(step S13).

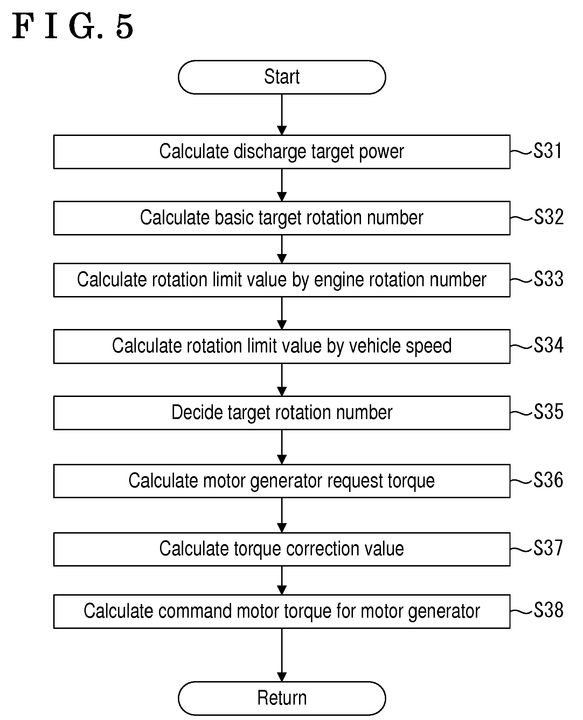

Next, the battery discharge control at step S15 is explained. Fig. 5 is a flowchart indicating the procedures of the battery discharge control of the first embodiment. First, the target power calculation portion 203 inputs the basic discharge target power and the discharge permissible power from the battery ECU 131 and calculates the discharge target power based on the basic discharge target power and the discharge permissible power (step S31).

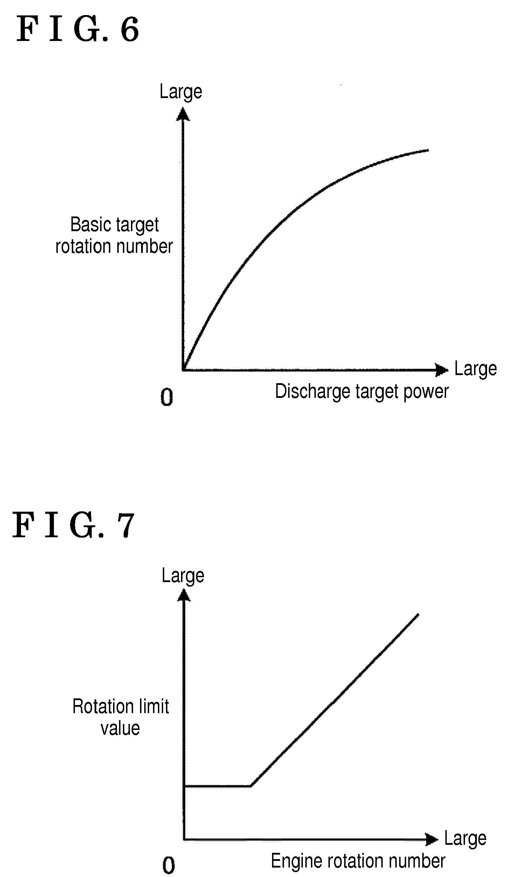

Next, the discharge control portion 209 calculates a basic target rotation number of the motor generator 102 based on the discharge target power (step S32). The basic target rotation number is an operation point at which a steady rotation of the motor generator 102 is obtained with the discharge target power. Fig. 6 is a graph indicating a relation between the discharge target power and the basic target rotation number of the motor generator 102. A horizontal axis indicates the discharge target power and a vertical axis indicates the basic target rotation number of the motor generator 102. The discharge control portion 209 calculates the basic target rotation number of the motor generator 102 based on the graph illustrated in Fig. 6.

Next, the discharge control portion 209 inputs an engine rotation number from the engine ECU 111 and calculates a rotation limit value by the engine rotation number based on a correlation between the engine rotation number and the rotation limit value (step S33). Accordingly in a region where a sound of the engine 101 is small, the number of rotations of the motor generator 102 is restricted. Fig. 7 is a graph indicating a correlation between the engine rotation number and the rotation limit value. In Fig. 7, a horizontal axis is the engine rotation number and a vertical axis is the rotation limit value.

Next, the discharge control portion 209 inputs the vehicle speed from the vehicle speed sensor (not illustrated) and calculates the rotation limit value of the motor generator 102 depending on the vehicle speed (step S34). Specifically, the discharge control portion 209 calculates the rotation limit value by multiplying the vehicle speed by a motor rotation number conversion factor which is specified beforehand to thereby calculate the rotation limit value. The rotation limit value is calculated so as not to reach or exceed the number of rotations of the motor generator 102 as in the EV mode.

The discharge control portion 209 decides a minimum value among the basic target rotation number calculated in step S32 and the rotation limit values calculated in steps S33 and S34 to be the target rotation number of the motor generator 102 (step S35).

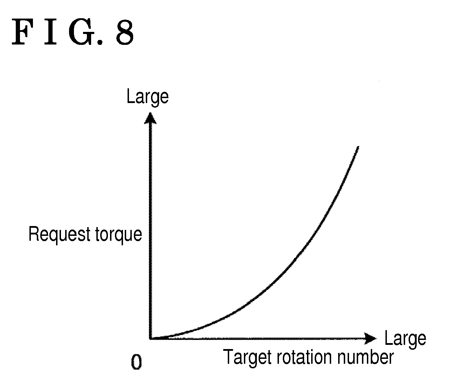

Next, the discharge control portion 209 calculates, on a basis of the target rotation number of the motor generator 102, a request torque which allows the steady rotation with the target rotation number (step S36). Fig. 8 is a graph indicating a correlation between the target rotation number of the motor generator 102 and the request torque. In Fig. 8, a horizontal axis is the target rotation number of the motor generator 102 and a vertical axis is the request torque. The discharge control portion 209 calculates the request torque based on the graph.

The discharge control portion 209 inputs the number of rotations (measured value) of the motor generator 102 from the motor generator ECU 114 and performs a PI control (proportional control) based on a deviation between the target rotation number and the rotation number measured value to thereby calculate a torque correction value (step S37).

The discharge control portion 209 corrects the request torque calculated in step S36 by the torque correction value calculated in step S37 to calculate a command motor torque for the motor generator 102 (step S38). The discharge control portion 209 sends the command motor torque calculated in the aforementioned manner to the motor generator ECU 114 so that the motor generator 102 performs the power operation based on the command motor torque.

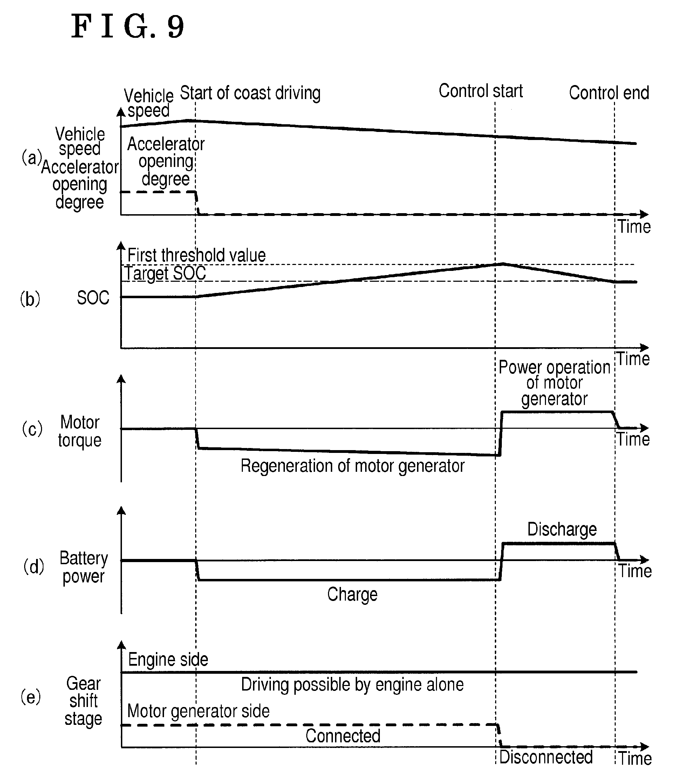

Fig. 9 is a diagram illustrating a state of sequential changes of the vehicle speed, the accelerator opening degree, the SOC, the motor torque, the battery power and the gear shift stage with the gear shift stage in the state where the driving is possible by the engine 101 alone. As illustrated in Fig. 9(a), in a case where the accelerator opening degree becomes zero and the coast driving is started, the deceleration driving control is started and the regeneration control by the motor generator 102 is performed as illustrated in Fig. 9(c).

Then, in a case where the SOC of the high-voltage battery 130 reaches the first threshold value as illustrated in Fig. 9(b), the control according to the present embodiment is started. That is, as illustrated in Fig. 9(e), the motor generator 102 and the driving shaft are disconnected. Then, the power operation by the motor generator 102 is performed as illustrated in Fig. 9(c) and the discharge of the high-voltage battery 130 is performed as illustrated in Fig. 9(d). When the SOC of the high-voltage battery 130 decreases to the target SOC, the power operation by the motor generator 102 is stopped as illustrated in Fig. 9(c) and the discharge of the high-voltage battery 130 is also stopped as illustrated in Fig. 9(d). The control according to the present embodiment is terminated.

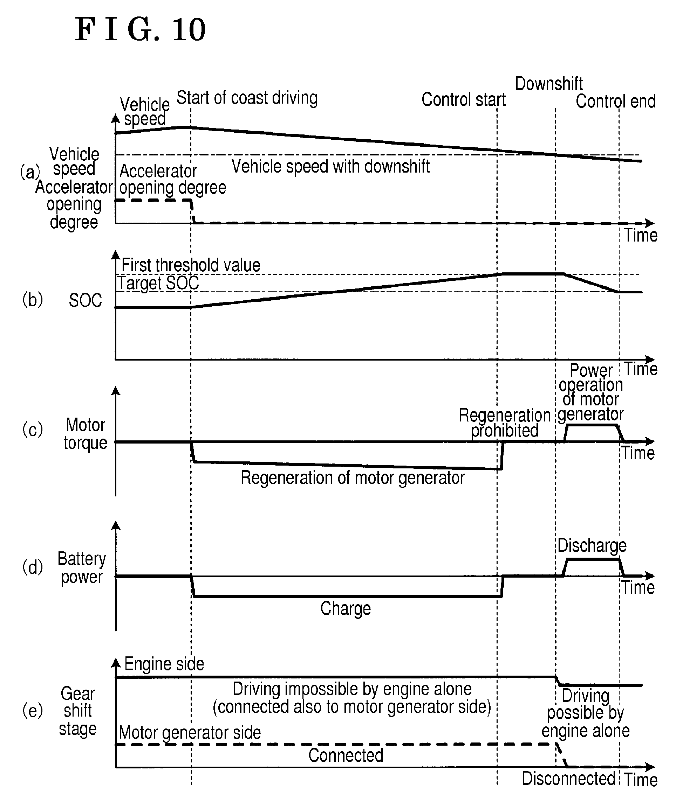

Fig. 10 is a diagram illustrating a state of sequential changes of the vehicle speed, the accelerator opening degree, the SOC, the motor torque, the battery power and the gear shift stage in the state where the driving is impossible by the engine 101 alone. As illustrated in Fig. 10(a), in a case where the accelerator opening degree becomes zero and the coast driving is started, the deceleration driving control is started and the regeneration control by the motor generator 102 is performed as illustrated in Fig. 10(c).

Then, in a case where the SOC of the high-voltage battery 130 reaches the first threshold value as illustrated in Fig. 10 (b), the control according to the present embodiment is started. At this point, as illustrated in Fig. 10(e), the gear shift stage is in the state where the driving is impossible by the engine 101 alone. Thus, as illustrated in Fig. 10(c), the regeneration control by the motor generator 102 is prohibited.

In a case where the downshift is conducted by the driver so that the gear shift stage is changed to the state where the driving is possible by the engine 101 alone as illustrated in Fig. 10(e), the motor generator 102 and the driving shaft are disconnected. Then, the power operation by the motor generator 102 is performed as illustrated in Fig. 10(c) and the discharge of the high-voltage battery 130 is performed as illustrated in Fig. 10(d). When the SOC of the high-voltage battery 130 decreases to the target SOC, the power operation by the motor generator 102 is stopped as illustrated in Fig. 10(c) and the discharge of the high-voltage battery 130 is also stopped as illustrated in Fig. 10(d). The control of the present embodiment is terminated accordingly.

In the present embodiment, in a case where the regeneration control is under execution and the SOC of the high-voltage battery 130 reaches the first threshold value at which the high-voltage battery 130 is fully charged in the coast driving state, the control is performed for discharging the high-voltage battery 130 to the target SOC by disconnecting between the motor generator 102 and the driving shaft to cause the motor generator 102 to perform the power operation. Accordingly, in the present embodiment, uncomfortable feeling to the driver and generation of noise and vibration are inhibited during the coast driving. The SOC of the high-voltage battery 130 is maintained constant and the discharge control may be easily performed. The motor generator 102 may be inhibited from being heated up.

That is, in the present embodiment, in a case where the driving force is transmittable by the engine 101 alone, i.e., in a case where the engine 101 and the driving shaft are connected and the driving force transmission path to the engine 101 is connected, the motor generator 102 and the driving shaft are disconnected to interrupt the driving force transmission path to the motor generator 102. Thus, according to the present embodiment, a smooth transition from the deceleration by the regeneration control of the motor generator 102 to the deceleration by engine braking may achieve uninterrupted deceleration and inhibit overcharge of the high-voltage battery 130.

In this case, the number of rotations of the engine 101 is uniquely determined on a basis of the vehicle speed and the gear shift stage. Thus, in the present embodiment, an engine sound corresponding to a normal vehicle with a petrol engine (conventional vehicle) is obtained, which may minimize uncomfortable feeling to the driver and generation of noise and vibration.

In addition, in the present embodiment, the discharge of the high-voltage battery 130 by the power operation of the motor generator 102 is performed in a state where the driving force transmission path of the motor generator 102 is interrupted, thereby maintaining the state of charge SOC to be constant. Further, in the present embodiment, because unnecessary switching between the power operation and the regenerative operation does not occur, the heating of the motor generator is minimized, which may easily achieve the discharge control. Furthermore, in the present embodiment, because unnecessary switching between the power operation and the regenerative operation does not occur, recovered energy is inhibited from going to waste and power consumption may be improved.

### (Second embodiment)

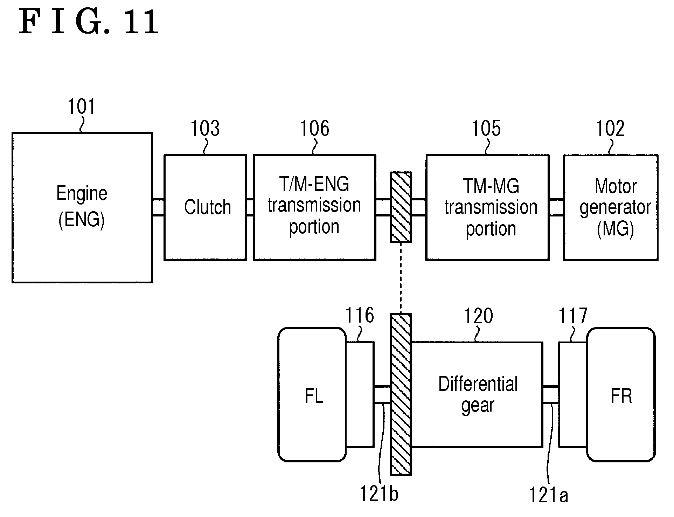

The hybrid vehicle 100 in the second embodiment differs from the first embodiment 1 in configuration of the drive system. Fig. 11 is a block diagram of the drive system of the hybrid vehicle 100 of the second embodiment. The function and configuration of the control unit of the present embodiment are the same as the first embodiment.

In Fig. 11, the T/M-MG transmission portion 105 is the mechanism that switches a rotation torque output from the motor generator 102 to a rotation direction for moving forward or a rotation direction for moving rearward for acceleration or deceleration. The T/M-ENG transmission portion 106 is the mechanism that switches a rotation torque output from the engine output shaft of the engine 101 to a rotation direction for moving forward or a rotation direction for moving rearward for acceleration or deceleration.

The clutch 103 is disposed between the engine 101 and the T/M-ENG transmission portion 106 to interrupt or allow the torque transmission from the engine 101 to the T/M-ENG transmission portion 106.

In the present embodiment, as illustrated in Fig. 11, each of the T/M-MG transmission portion 105 for the motor generator 102 and the T/M-ENG transmission portion 106 for the engine 101 is capable of independently transmitting the driving force to the drive shafts 121a, 121b, and the differential gear 120 serving as the driving shaft regardless of the gear shift stage of each of the T/M-MG transmission portion 105 and the T/M-ENG transmission portion 106.

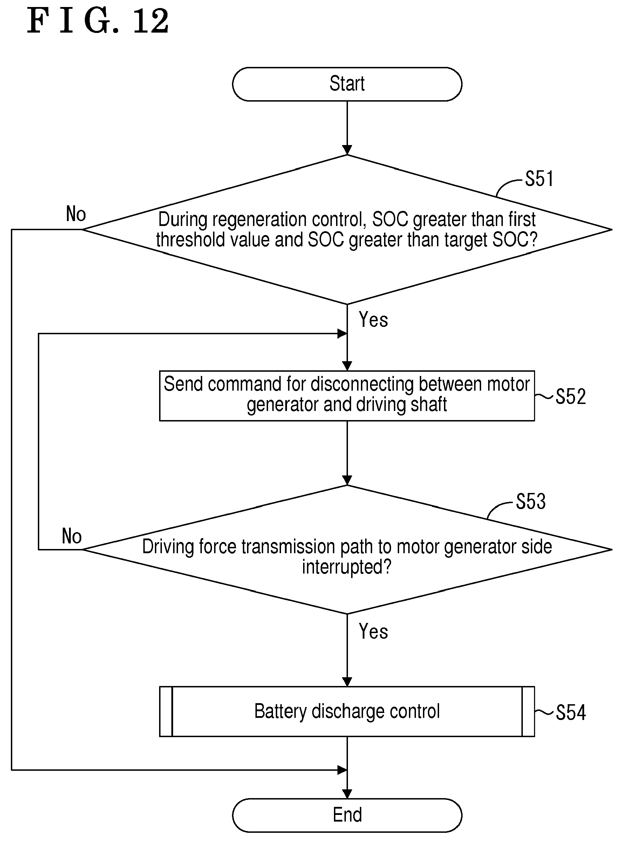

Next, the driving control process of the present embodiment configured as mentioned above is explained. Fig. 12 is a flowchart indicating procedures of the driving control process according to the second embodiment.

First, the judgment portion 202 determines whether or not the regeneration control by the motor generator 102 is presently performed, the SOC of the high-voltage battery 130 is greater than the first threshold value, and the SOC of the high-voltage battery 130 is greater than the target SOC (step S51).

Then, in a case where it is determined that the regeneration control by the motor generator 102 is not presently performed or the SOC of the high-voltage battery 130 is equal to or smaller than the first threshold value or the SOC of the high-voltage battery 130 is equal to or smaller than the target SOC (No in step S51), the process is terminated.

On the other hand, in a case where it is determined that the regeneration control by the motor generator 102 is presently performed, the SOC of the high-voltage battery 130 is greater than the first threshold value, and the SOC of the high-voltage battery 130 is greater than the target SOC (Yes in step S51), the driving control portion 206 sends the command for disconnecting between the motor generator 102 and the driving shaft to the transmission ECU 113 (step S52). Accordingly, the driving shaft is disconnected from the motor generator 102 to interrupt the driving force transmission path to the motor generator 102.

The driving control portion 206 sends the driving shaft disconnection command in step S52 to the transmission ECU 113 until the interruption of the driving force transmission path to the motor generator 102 is completed (No in step S53).

Then, when the driving shaft is disconnected from the motor generator 102 and the interruption of the driving force transmission path to the motor generator 102 is completed (Yes in step S53), the battery discharge control is performed (step S54). Details of the battery discharge control are explained later.

According to the present embodiment, each of the T/M-MG transmission portion 105 for the motor generator 102 and the T/M-ENG transmission portion 106 for the engine 101 is capable of independently transmitting the driving force to the drive shafts 121a, 121b, and the differential gear 120 serving as the driving shaft regardless of the gear shift stage of each of the T/M-MG transmission portion 105 and the T/M-ENG transmission portion 106. Thus, the process for determining whether or not the gear shift stage is in the state where the engine 101 is capable of independently transmitting the driving force to the driving shaft is not necessary. The same effects as the first embodiment are obtained.

The embodiments of the present invention have been explained, however, the aforementioned embodiments are proposed as examples and not intended to limit the scope of the invention. The above new embodiments may be performed in other various modes. Without departing from the spirit of the invention, various omissions, replacements and changes may be made. The embodiments and modifications thereof are included within the scope of the invention and included in the invention described in the scope of claims and equivalents thereof.

### EXPLANATION OF REFERENCE NUMERALS

- 101: engine
- 102: motor generator
- 103: clutch
- 104: clutch actuator
- 105: T/M-MG transmission portion
- 106: T/M-ENG transmission portion
- 107: shift actuator
- 108: common transmission portion
- 109: brake oil pressure control portion
- 110: inverter
- 111: engine ECU (ENG-ECU)
- 112: electronic control brake ECU (ECB-ECU)
- 113: transmission ECU (T/M-ECU)
- 114: motor generator ECU (MG-ECU)
- 120: differential gear
- 121a, 121b: drive shaft
- 200: integrated ECU
- 201: driving mode determination portion
- 202: judgment portion
- 203: target power calculation portion
- 204: operation point decision portion
- 206: driving control portion
- 207: driving force calculation portion
- 208: regeneration control portion
- 209: discharge control portion

## Claims

1. A vehicle control apparatus controlling a vehicle which is configured to be driven with a motor generator serving as a power source without a usage of an engine and which is configured to be driven with both the engine and the motor generator serving as the power source, the vehicle control apparatus comprising:
a regeneration control portion performing a regeneration control by the motor generator;
a judgment portion determining whether or not the regeneration control by the motor generator is under execution and determining whether or not a state quantity of a battery exceeds a predetermined threshold value in a case where the regeneration control is under execution;
a driving control portion disconnecting between a driving shaft of the vehicle and the motor generator in a case where the regeneration control is under execution and the state quantity of the battery exceeds the predetermined threshold value; and
a discharge control portion discharging the battery by controlling the motor generator to perform a power operation in a state where the driving shaft and the motor generator are disconnected.

2. The vehicle control apparatus according to claim 1, wherein the judgment portion further determines whether or not the state quantity decreases to or below a predetermined target value after the state quantity exceeds the predetermined threshold value,
the discharge control portion discharges the battery by controlling the motor generator to perform the power operation until the state quantity decreases to or below the predetermined target value.

3. The vehicle control apparatus according to claim 1, wherein the motor generator and the engine includes a common output shaft via a transmission portion, each of the motor generator and the engine being configured to be independently connected and disconnected relative to the driving shaft by a gear shift stage of the transmission portion,
the judgment portion further determines whether or not the gear shift stage is in a state where the engine is configured to independently transmit a driving force to the driving shaft,
the driving control portion disconnects between the driving shaft of the vehicle and the motor generator in a case where the gear shift stage is in the state where the engine is configured to independently transmit the driving force to the driving shaft.

4. The vehicle control apparatus according to claim 3, wherein the regeneration control portion further prohibits the regeneration control by the motor generator in a case where the gear shift stage is in a state where the engine is inhibited from being configured to independently transmit the driving force to the driving shaft.

5. The vehicle control apparatus according to claim 1, further comprising a first transmission portion for the motor generator and a second transmission portion for the engine, each of the first transmission portion and the second transmission portion being configured to be independently connected and disconnected relative to the driving shaft regardless of a gear shift stage of each of the first transmission portion and the second transmission portion.

6. The vehicle control apparatus according to claim 1, wherein the state quantity includes a state of charge (SOC).

7. The vehicle control apparatus according to claim 2, wherein in a case where the predetermined threshold value is specified to be a first threshold value indicating that the battery is in a nearly fully charged state and the predetermined target value is specified to be a first target value smaller than the first threshold value, the discharge control portion discharges the battery until the state quantity decreases to or below the first target value, and the discharge control portion stops the discharge of the battery in a case where the state quantity decreases to or below the first target value.
